# EUROPEAN PATENT SPECIFICATION

(11) **EP 2 388 713 B1**
(45) Date of publication and mention of the grant of the patent: **19.07.2017**
(21) Application number: 10163549.8
(22) Date of filing: 21.05.2010
(51) Int. Cl.: G06F 17/30, G06Q 10/00

(54) **Method, system and apparatus for remote data searching**
Verfahren, System und Vorrichtung zur Ferndatensuche
Procédé, système et appareil pour la recherche de données à distance

(43) Date of publication of application: 23.11.2011
(73) Proprietor: BlackBerry Limited, Waterloo, ON N2K 0A7 (CA)
(72) Inventor: Martin, Daryl, Joseph, Waterloo Ontario N2L 5R9 (CA); Godfrey, James, Andrew, Waterloo Ontario N2L 5Z5 (CA); Wilson, John, Ferguson, Waterloo Ontario N2L 5Z5 (CA)
(74) Representative: MERH-IP Matias Erny Reichl Hoffmann Patentanwälte PartG mbB

(56) References cited:
- US-A1- 2003 097 358
- US-A1- 2005 187 971
- US-A1- 2008 022 057

## Description

### FIELD

The specification relates generally to computing devices, and specifically to a method, system and apparatus for remote data searching.

### BACKGROUND

As the storage abilities of mobile electronic devices grow, it becomes more challenging to search for data both on and off a device: the processing capability of such devices is generally limited, as are the power capabilities. As a rule of thumb the larger the data is on a device then the longer it takes to find a data (e.g. document/e-mail) being searched for. Furthermore, to minimize power consumption, searching algorithms usually do not do any in-depth searching but just simple string comparisons, hence the results may not be useful. While remote searching of data has been suggested, such remote searching generally occurs upon a larger body of data than is stored on the device and hence search results may not be pertinent to data stored at the device: to view the data contained in the search results it may be necessary to request the data from a remote device.
Document US 2005/0187971 A1 discloses a method for searching a remote database, wherein a mobile device comprises a local search module for identifying one or more data items on a local application database that match a set of search parameters. If the data items cannot be found in the local application database, a remote search module on a server may be used to identify a copy of the data items in a server application database.

### Summary

A first aspect of the specification provides a method according to claim 1 for remote searching of data stored on a communication device, the communication device in communication with a server for tracking data associated with the communication device and data associated with a synchronizable computing device, synchronizable with the communication device. The method comprises maintaining, at the server, an index of data stored at the communication device, the index for distinguishing the data stored at the communication device from data stored at the synchronizable computing device. The method further comprises maintaining a searchable copy of data stored on the communication device, cross-referenced to the index, the searchable copy searchable using search parameter data received from the communication device to produce search results transmittable back to the communication device.

The method can further comprise: receiving, from the communication device, the search parameter data: searching the searchable copy, using the search parameter data, to produce the search results; and transmitting the search results, to the communication device. The method can further comprise synchronizing the index of data and the searchable copy with the data stored at the communication device prior to searching the searchable copy.

The method can further comprise synchronizing the index of data and the searchable copy with the data stored at the communication device.

The index of data can include respective locations of the data stored at the communication device. The search results can comprise respective locations of the search results on the communication device.

The data stored on the communication device can comprise at least one of message data, attachments to messages, calendar data, contact data, note data, memo data and task data.

The searchable copy can be maintained at, at least one of the server and a remote computing device in communication with the server.

A second aspect of the specification provides a server for remote searching of data stored on a communication device. The server comprises a communication interface enabled to communicate with the communication device and a synchronizable computing device, synchronizable with the communication device. The server further comprises a memory enabled to store an index of data stored at the communication device. The server further comprises a processing unit in communication with the communication interface and the memory, the processing unit enabled to: track data associated with the communication device and data associated with the synchronizable computing device; maintain the index of data, the index for distinguishing the data stored at the communication device from data stored at the synchronizable computing device; and maintain a searchable copy of data stored on the communication device cross-referenced to the index, the searchable copy searchable using search parameter data received from the communication device to produce search results transmittable back to the communication device.

The processing unit can be further enabled to: receive, from the communication device, via the communication interface, the search parameter data; search the searchable copy, using the search parameter data, to produce the search results; and transmit the search results to the communication device, via the communication interface. The processing unit further can be enabled to synchronize the index of data and the searchable copy with the data stored at the communication device prior to the searching the searchable copy.

The processing unit can be further enabled to synchronize the index of data and the searchable copy with the data stored at the communication device.

The index of data can include respective locations of the data stored at the communication device. The search results comprise respective locations of the search results on the communication device.

The data stored on the communication device can comprise at least one of message data, attachments to messages, calendar data, contact data, note data, memo data and task data.

The searchable copy can be maintained at, at least one of the memory and a remote computing device in communication with the server.

A third aspect of the specification provides a computer program product, comprising a computer usable medium having a computer readable program code adapted to be executed to implement a method for remote searching of data stored on a communication device, the communication device in communication with a server for tracking data associated with the communication device and data associated with a synchronizable computing device, synchronizable with the communication device. The method comprises maintaining, at the server, an index of data stored at the communication device, the index for distinguishing the data stored at the communication device from data stored at the synchronizable computing device. The method further comprises maintaining a searchable copy of data stored on the communication device, cross-referenced to the index, the searchable copy searchable using search parameter data received from the communication device to produce search results transmittable back to the communication device.

### BRIEF DESCRIPTIONS OF THE DRAWINGS

Embodiments are described with reference to the following figures, in which:
Fig. 1 depicts a system for remote searching of data, according to non-limiting embodiments;
Fig. 2 depicts a method for remote searching of data, according to non-limiting embodiments; and
Fig. 3 depicts the system of Fig. 1 performing a search, according to non-limiting embodiments.

### DETAILED DESCRIPTION OF THE EMBODIMENTS

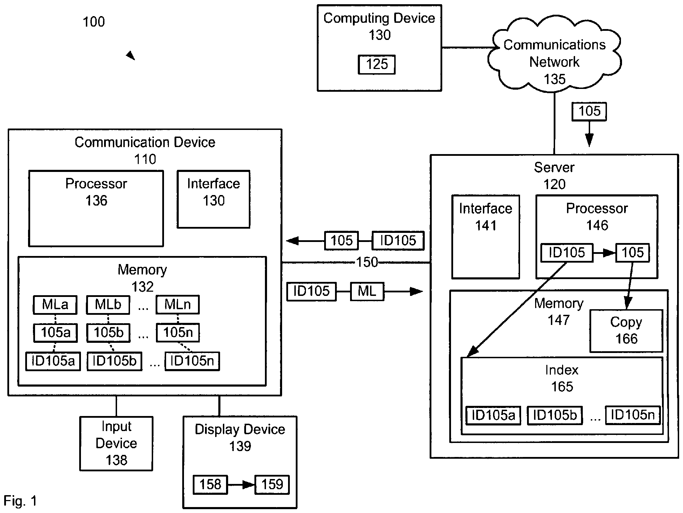

Figure 1 depicts a system 100 for remote searching of data 105a, 105b,...105n stored on a communication device 110, according to non-limiting embodiments. Data 105a, 105b,...105n us generically and collectively referred to as data 105, and can comprise any suitable combination of message data, attachments to messages, calendar data, contact data, note data, memo data and task data.

Communication device 110 is in communication with a server 120 via a link 150. The link 150 can be wireless or wireless as desired; link 150 can further comprise any suitable communication network. In general server 120 is enabled to track data 105 associated with communication device 110 and data 125 associated with a synchronizable computing device 130, in communication with server 120 via a communications network 135. In some embodiments, link 150 can comprise communication network 135. Furthermore, communication device 110 can be synchronized with computing device 130, via server 120, in any desired manner.

However, computing resources at communication device 110 are generally less powerful than computing resources at computing device 120 (e.g. i.e. communication device 110 will generally comprise a slower processor and have less memory than computing device 130). Hence data 105 at communication device 110 is generally a subset of data 125 at computing device 130. For example, computing device 130 can be enabled to store thousands of e-mails (e.g. data 125), while communication device 110 can be enabled to store a subset (e.g. data 105) of the thousands of e-mails. In some non-limiting embodiments, computing device 130 comprises a MAPI (Messaging Application Programming Interface) server and communication device 110 comprise a mobile communication device such as PDA enabled to receive and process messages/e-mail.

In an event, communication device 110 generally comprises any suitable communication/computing device, including but not limited a laptop computer, a PDA, a cellphone, and the like, and/or a combination.

Communication device 110 comprises a communication interface 130 enabled to communicate with server 120, interface 130 being generally compatible with link 150. That is, if link 150 comprises a wireless link, interface 130 is enabled to communicate wirelessly, using any suitable protocol (including but not limited to WiFi, WiMax and/or cellular telephone protocols); and/or if link 150 comprises a wired link, then interface 130 is enabled to communicate via a wired link (including but not limited to both remote and local links, such as USB/serial cables, and/or a wired communication network), using any suitable wired protocol.

Communication device 110 further comprises a memory 132 for storing data 105. Memory 132 can comprise any suitable memory device, including but not limited to random access memory (RAM), removable memory, memory cards, hard disks, and the like.

Communication device 110 further comprises a processor 136 in communication with interface 130 and memory 132, for example via a suitable computer bus (not depicted). Processor 136 comprises any suitable processor, including but limited to a central processing unit (CPU).

Communication device 110 can also be in communication with any suitable input device 126, or combination of input devices. Input device 126 is generally enabled to receive input data, and can comprise any desired combination of suitable input devices, including but not limited to a keyboard, a pointing device, a mouse, a track wheel, a touchpad, a touch screen and the like.

Communication device 110 can also be in communication with any suitable display device 139. The display device 139 can include, but is not limited to, a flat panel display (e.g. a liquid crystal display (LCD), plasma, and the like), a cathode ray tube (CRT), a computer monitor, and the like. Display device 139 comprises circuitry 158 for generating a representation 159 of data 105 or any other suitable data including but not limited to graphical user interfaces (GUI). Display device 139 can include any suitable combination of CRT and/or flat panel displays (e.g. LCD, plasma and the like), and circuitry 158 can include any suitable combination of circuitry for controlling the CRT and/or flat panel displays etc., including but not limited to display buffers, transistors, electron beam controllers, LCD cells, plasmas cells, phosphors etc. In particular, display device 139 and circuitry 158 can be controlled by processor unit 136 to generate representation 159.

In some embodiments, communication device 110 can comprise input device 138 and display device 139.

Server 120 generally comprises any suitable computing device for tracking data 105 and data 125. Server 120 can also be enabled to manage synchronization of data between communications device 110 and computing device 130, in any suitable manner. For example, if data 105a is deleted at communication device 110, corresponding data within data 125 can be deleted in some embodiments, but is not deleted in other embodiments. Server 120 generally manages these processes and to keep communication device 110 and computing device 130 synchronized in accordance with pre-defined synchronization rules, and/or commands from communication device 110 and/or computing device 130.

Server 120 generally comprises a communication interface 141, which can be similar to interface 130, interface 141 generally compatible with link 150, and for communication with computing device 130 via communications network 135. Server 120 further comprises a memory 147 for storing an index 165 of data stored at communication device 110, and a searchable copy 166 of data stored on communication device 110 cross-referenced to index 165. In particular, index 165 distinguishes data 105 stored at communication device 110 from data 125 stored at synchronizable computing device 130. For example, data 105 is generally transmitted to communication device 110 via server 120, and data 125 is generally transmitted to computing device 130 via server 120, with data 105 generally comprising a subset of data 125. In the prior art, servers similar to server 120 do not always track data 105 and data 125 and/or distinguish between data 105 and data 125, and do not distinguish between data 105 and data 125 when performing a remote search. Hence, index 165 generally enables server 120 to distinguish between data 105 and data 125 by indexing data 105 stored at communication device 110.

In some embodiments, one of index 165 or copy 166 can comprise the other of index 165 and copy 166.

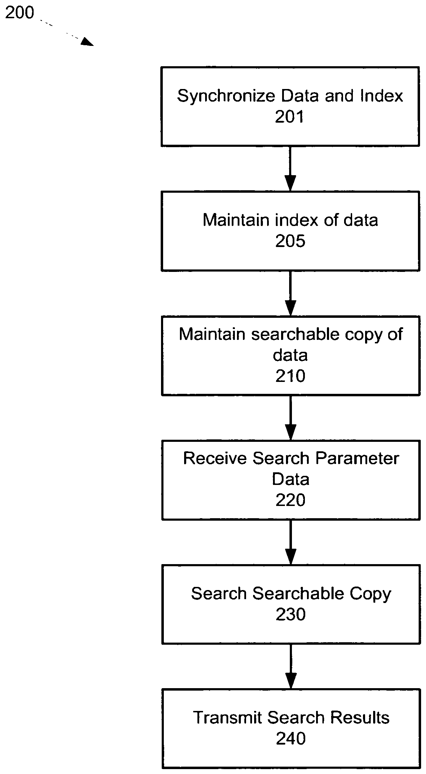

Server 120 further comprises a processor 146 for tracking data 105, data 125, managing synchronization between communication device 110 and computing device 130, maintaining index 165 and maintaining copy 166. Processor 146 is further enabled to process search parameter data 180 received from communication device 110 to search copy 166, as described below with reference to Figure 2.

Index 165 generally comprises a list of identifiers of each data 105a, 105b,...105n stored at communication device 110. For example, system 100 is generally enabled to deliver data 105 to communications device 110 via server 120; server 120 can then be generally enabled to assign an identifier ID105 to each respective data 105a, 105b,...105n before it is transmitted to communications device 110, each identifier ID105 for distinguishing each data 105 from one another. For example, an identifier ID105 of each respective data 105a, 105b,...105n can comprise a unique and/or computationally unique identifier, including but not limited to consecutively assigned alphanumeric identifiers and a hash of each respective data 105, though any suitable identifier is within the scope of present embodiments. Identifier ID105 can be transmitted to communications device 110 along with data 105, identifier ID105 and data 105 stored in memory 132. Furthermore, identifier ID105 is added to index 165 in memory 147, and data 104 is added to copy 166. In some alternative embodiments, data 105 can be processed into a more searchable format (e.g. unformatted text) before being added to copy 166.

In any event, index 165 enables server 120 to distinguish data 105 and data 125, for example in embodiments where memory 147 stores a copy of at least a subset of data 125 that is not in data 105.

In further embodiments, index 165 can comprise a location ML of each data 105 in memory 132. In these embodiments, once data 105 is stored in memory 132, communications device 110 can transmit location ML to server 120 along with identifier ID105, where location ML is added to index 165.

In some non-limiting embodiments, index 165 comprises Table 1:

**Table 1**

| Data Identifier | Memory Location |
|---|---|
| ID105a | MLa |
| ID105b | MLb |
| ... | ... |
| ID105n | MLn |

While Table 1 is comprised of rows and columns, index 165 can comprise any suitable format. Furthermore, while Table 1 can have any suitable number of rows and any suitable number of columns. In this embodiment, Table 1 comprises two columns (one for "Data Identifier" and one for "Memory Location"), a header row (comprising the text "Data" Identifier" and "Memory Location"), and a number of rows corresponding to data 105, in a one-to-one relationship. Each "Data Identifier" ID105a, ID105b,...ID105n, comprises an identifier of corresponding data 105a, 105b,...105n, as described above. Furthermore, each "Memory Location" comprises a location of corresponding respective data 105 in memory 132.

Copy 166 can comprise data 105 stored in any suitable format. As described above, in some embodiments, data 105 can be processed into a more searchable format (e.g. unformatted text) before being added to copy 166. In some non-limiting embodiments, index 165 comprises Table 2, where data 105 is cross referenced to index 165 using identifiers ID105:

**Table 2**

| Data Identifier | Data |
|---|---|
| ID105a | 105a |
| ID105b | 105b |
| ... | ... |
| ID105n | 105n |

While Table 2 is comprised of rows and columns, copy 166 can comprise any suitable format. Furthermore, while Table 2 can have any suitable number of rows and any suitable number of columns. In this embodiment, Table 2 comprises two columns (one for "Data Identifier" and one for "Data"), a header row (comprising the text "Data" Identifier" and "Data"), and a number of rows corresponding to data 105, in a one-to-one relationship. Each "Data Identifier" ID105a, ID105b,...ID105n, comprises an identifier of corresponding data 105a, 105b,...105n, as described above. Furthermore, each "Data" comprises data 105 stored in any suitable format.

Attention is now directed to Figure 2 which depicts a method 200 for remote searching of data stored on a communication device. In order to assist in the explanation of the method 200, it will be assumed that the method 200 is performed using the system 100, and in particular server 120. Furthermore, the following discussion of the method 200 will lead to a further understanding of the system 100 and its various components. However, it is to be understood that the system 100 and/or the method 200 can be varied, and need not work exactly as discussed herein in conjunction with each other, and that such variations are within the scope of present embodiments.

At step 201, data 105 is synchronized with index 166 by transmitting synchronization notifications between communications device 110 and server 120 using any suitable manner. For example, if given data 105 is deleted from memory 132, communication device 110 can be enabled to transit a delete notification to server 120, which can be processed by processor 146 such that index 165 and copy 166 are updated to delete the corresponding identifier ID105 and data 105. Similarly, if data 105 is modified at communication device 110, communication device 110 can be enabled to transit a modification notification to server 120, which can be processed by processor 146 such that copy 166 is updated to modify data 105; in these embodiments index 165 is modified if memory location ML of data 105 is modified. Finally, in some embodiments, information can be added to data 105 at the communication device 110, for example via input device 138 and/or via addition of data stored on a removable memory (e.g. a flash memory) and/or a wired synchronization with a computing device other than computing device 130, connected directly to communication device 110, the synchronization bypassing server 120. In these embodiments, new data 105 can be created at communication device 110, communication device 110 can be enabled to transit an addition notification to server 120, including the new data 105, which can be processed by processor 146 such that index 165 and copy 166 are updated accordingly. In these embodiments, further data can be exchanged between communication device 110 and server 120 in the generation and assignment of an identifier ID105 to new data 105 such that data 105, index 165 and copy 166 are synchronized.

In some embodiments, step 201 can occur on an on-going basis as each change to data 105 occurs, in that when data 105 is deleted, modified or added to, then the corresponding notification is transmitted to server 120. In other embodiments, step 201 can occur periodically, with all changes to data 105 being synchronized at once. In further embodiments, step 201 can occur when a search is to be initiated, as in step 220, described below.

At step 205, index 165 is maintained for distinguishing data 105 from data 125. For example, as data 105 is transmitted to communication device 110, index 165 is maintained/updated with identifiers ID105 as they are determined, described above. Step 205 can include storing memory locations ML received from communication device 110, as described above.

At step 210, copy 166 is maintained, wherein copy 166 is searchable using search parameter data received from communication device 110 to produce search results transmittable back to communication device 110, as described below. For example, as data 105 is transmitted to communication device 110, and index 165 is maintained/updated with identifiers data 105 in any suitable format, described above. In some embodiments, copy 166 can be maintained at yet a remote computing device (not depicted), different from computing device 110 and server 120, the remote computing device in communication with server 120. In these embodiments, synchronization step 201 can occur via server 120, with synchronization notifications transmitted to the remote computing device via server 120.

Steps 201, 205 and 210 can be performed in any suitable order and/or simultaneously. In some embodiments, step 205 and/or step 210 can comprise step 201, with index 165 and/or copy 166 being maintained due to a synchronization.

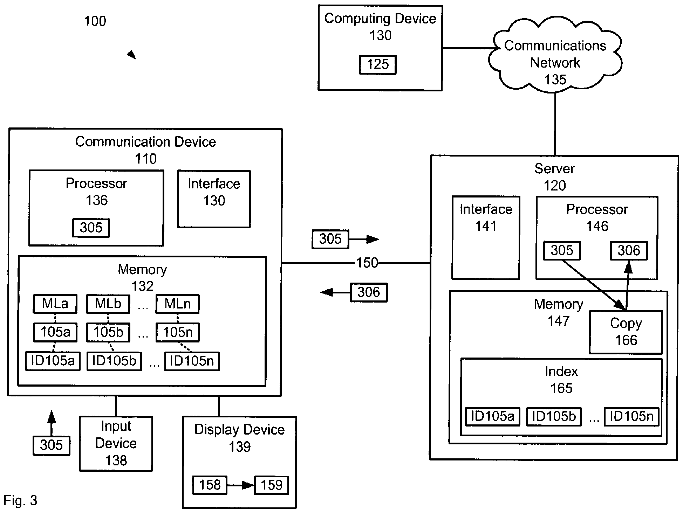

At step 220, and as depicted in Figure 3, search parameter data 305 is received at server 120 from communication device 110. For example, search parameter data 305 can be first received at communication device 110 via input device 138, and in some embodiments, via a GUI provided via representation 159. Search parameter data 305 is then processed by processor 136, processor 136 enabled to transmit search parameter 305 to server 120 rather than search data 105 stored in memory 132 using search parameter data 305. In some embodiments, processor can be further enabled to search data 105 stored in memory 132 using search parameter data 305 before or after transmitting search parameter data 305 to server 120. In other embodiments, transmission of search parameter data 305 to server 120 occurs upon receiving further input data indicative that a remote search is to be performed.

At step 230, server 120 searches searchable copy 166, using search parameter data 305, to produce search results 306. Any suitable algorithm of any suitable complexity can be applied in searching searchable copy 166 using search parameter data 305. In general, processor 146 can be more powerful (e.g. faster etc.) than processor 136 and hence more robust search algorithms may be used to search copy 166 than could be practically used at communication device 110. Furthermore, index 165 can be processed in order to distinguish between data 125 and data 105, for example in embodiments where memory 147 stores a copy of at least a subset of data 125 that is not in data 105. In some embodiments, if a synchronization notification, described above with reference to step 201, is delayed and/or lost, and hence index 165 is out of date, then server 120 can use out of date index 165 and communication device 110 can filter search results 306 based on data stored in memory 132. Furthermore, if searchable copy 166 is maintained on a remote computing device, server 120 can forward search parameter data 305 to remote computing device to produce search results 306, which are then transmitted back to server 120; server 120 then processes index 165 in order to distinguish between data 125 and data 105, to further filter search results 306, before transmitting them to communication device 110, as described below.

At step 240, search results 306 are transmitted to communication device 110, where they can be provided in representation 159 via a suitable GUI. Search results 306 can include respective identifiers ID105 and memory locations ML of data 105 provided in search results 306.

In any event, by performing remote searches at server 120, and further by maintaining index 165 and copy 166 to limit remote searches only to data 105, rather than data 125, more complex algorithms may be applied in a search and search results 306 will be limited to a subset of data 105, such that search results 306 are available for processing at communication device 110 rather than having to be requested from a remote computing device such as computing device 130.

Those skilled in the art will appreciate that in some embodiments, the functionality of computing device 110 and server 120 can be implemented using preprogrammed hardware or firmware elements (e.g., application specific integrated circuits (ASICs), electrically erasable programmable read-only memories (EEPROMs), etc.), or other related components. In other embodiments, the functionality of computing device 110 and server 120 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

## Claims

1. A method for remote searching of data stored on a communication device (110), said communication device (110) in communication with a server (120) for tracking data associated with said communication device (110) and data associated with a synchronizable computing device (130), synchronizable with said communication device (110), the method comprising:
maintaining, at said server (120), an index of data stored at said communication device (110), said index for distinguishing said data stored at said communication device (110) from data stored at said synchronizable computing device (130), said data stored at said communication device (110) comprising a subset of said data stored at said synchronizable computing device (130);
maintaining a searchable copy of data stored on said communication device (110), cross-referenced to said index, said searchable copy searchable using search parameter data received from said communication device (110) to produce search results transmittable back to said communication device (110), said searchable copy (110) stored on one of said server (120) and a remote computing device,
wherein said index of data includes respective locations of said data stored at said communication device (110), and
wherein said search results comprise respective locations of said search results on said communication device (110).

2. The method of claim 1, further comprising:
receiving, from said communication device (110), said search parameter data;
searching said searchable copy, using said search parameter data, to produce said search results; and
transmitting said search results, to said communication device (110).

3. The method of claim 2, further comprising synchronizing said index of data and said searchable copy with said data stored at said communication device (110) prior to said searching said searchable copy.

4. The method of any of the preceding claims, further comprising synchronizing said index of data and said searchable copy with said data stored at said communication device (110).

5. The method of any of the preceding claims, wherein said data stored on said communication device (110) comprises at least one of message data, attachments to messages, calendar data, contact data, note data, memo data and task data.

6. The method of any of the preceding claims, wherein said searchable copy is maintained at, at least one of said server (120) and a remote computing device (130) in communication with said server (120).

7. A server (120) for remote searching of data stored on a communication device (110), said server (120) comprising:
a communication interface (141) enabled to communicate with said communication device (110) and a synchronizable computing device (130), synchronizable with said communication device (110);
a memory (147) enabled to store an index of data stored at said communication device (110);
a processing unit (146) in communication with said communication interface (141) and said memory (147), said processing unit (146) enabled to: track data associated with said communication device (110) and data associated with said synchronizable computing device (130) said data associated with said communication device (110) comprising a subset of said data associated with said synchronizable computing device (130); and implement any of the steps of the method of claims 1 to 6.

8. A computer program product, comprising a computer usable medium having a computer readable program code adapted to be executed to implement a method for remote searching of data stored on a communication device (110), said communication device (110) in communication with a server (120) for tracking data associated with said communication device (110) and data associated with a synchronizable computing device (130), synchronizable with said communication device (110), the method comprising:
maintaining, at said server (120), an index of data stored at said communication device (110), said index for distinguishing said data stored at said communication device (110) from data stored at said synchronizable computing device (130), said data stored at said communication device (110) comprising a subset of said data stored at said synchronizable computing device (130);
maintaining a searchable copy of data stored on said communication device (110), cross-referenced to said index, said searchable copy searchable using search parameter data received from said communication device (110) to produce search results transmittable back to said communication device (110), said searchable copy (110) stored on one of said server (120) and a remote computing device,
wherein said index of data includes respective locations of said data stored at said communication device (110), and
wherein said search results comprise respective locations of said search results on said communication device (110).

## Patentansprüche

1. Verfahren für eine Fernsuche von Daten, die auf einer Kommunikationsvorrichtung (110) gespeichert sind, wobei die Kommunikationsvorrichtung (110) in Kommunikation mit einem Server (120) ist zum Verfolgen von Daten, die mit der Kommunikationsvorrichtung (110) assoziiert sind, und Daten, die mit einer synchronisierbaren Computervorrichtung (130) assoziiert sind, die mit der Kommunikationsvorrichtung (110) synchronisierbar ist, wobei das Verfahren aufweist:
Führen, an dem Server (120), eines Indexes von Daten, die auf der Kommunikationsvorrichtung (110) gespeichert sind, wobei der Index vorgesehen ist zum Unterscheiden der auf der Kommunikationsvorrichtung (110) gespeicherten Daten von auf der synchronisierbaren Computervorrichtung (130) gespeicherten Daten, wobei die Daten, die auf der Kommunikationsvorrichtung (110) gespeichert sind, einen Teilsatz der Daten aufweisen, die auf der synchronisierbaren Computervorrichtung (130) gespeichert sind;
Führen einer durchsuchbaren Kopie von Daten, die auf der Kommunikationsvorrichtung (110) gespeichert sind, querverwiesen zu dem Index, wobei die durchsuchbare Kopie unter Verwendung von Suchparameterdaten durchsuchbar ist, die von der Kommunikationsvorrichtung (110) empfangen werden, um Suchergebnisse zu erzeugen, die zurück an die Kommunikationsvorrichtung (110) übertragen werden können, wobei die durchsuchbare Kopie (110) auf einem des Servers (120) und einer entfernten Computervorrichtung gespeichert ist,
wobei der Datenindex jeweilige Positionen der auf der Kommunikationsvorrichtung (110) gespeicherten Daten umfasst, und
wobei die Suchergebnisse jeweilige Positionen der Suchergebnisse auf der Kommunikationsvorrichtung (110) aufweisen.

2. Das Verfahren gemäß Anspruch 1, das weiter aufweist:
Empfangen der Suchparameterdaten von der Kommunikationsvorrichtung (110);
Durchsuchen der durchsuchbaren Kopie unter Verwendung der Suchparameterdaten, um die Suchergebnisse zu erzeugen; und
Übertragen der Suchergebnisse an die Kommunikationsvorrichtung (110).

3. Das Verfahren gemäß Anspruch 2, das weiter ein Synchronisieren des Datenindexes und der durchsuchbaren Kopie mit den auf der Kommunikationsvorrichtung (110) gespeicherten Daten vor dem Durchsuchen der durchsuchbaren Kopie aufweist.

4. Das Verfahren gemäß einem der vorhergehenden Ansprüche, das weiter ein Synchronisieren des Datenindexes und der durchsuchbaren Kopie mit den auf der Kommunikationsvorrichtung (110) gespeicherten Daten aufweist.

5. Das Verfahren gemäß einem der vorhergehenden Ansprüche, wobei die auf der Kommunikationsvorrichtung (110) gespeicherten Daten zumindest eines aus Nachrichtendaten, Anhängen an Nachrichten, Kalenderdaten, Kontaktdaten, Notizdaten, Memodaten und Aufgabendaten aufweisen.

6. Das Verfahren gemäß einem der vorhergehenden Ansprüche, wobei die durchsuchbare Kopie auf zumindest einem des Servers (120) und einer entfernten Computervorrichtung (130) in Kommunikation mit dem Server (120) geführt wird.

7. Ein Server (120) zum Fernsuchen von auf einer Kommunikationsvorrichtung (110) gespeicherten Daten, wobei der Server (120) aufweist:
eine Kommunikationsschnittstelle (141), betriebsfähig ist zum Kommunizieren mit der Kommunikationsvorrichtung (110) und einer synchronisierbaren Computervorrichtung (130), die mit der Kommunikationsvorrichtung (110) synchronisierbar ist;
einen Speicher (147), der betriebsfähig ist zum Speichern eines Indexes von auf der Kommunikationsvorrichtung (110) gespeicherten Daten;
eine Verarbeitungseinheit (146) in Kommunikation mit der Kommunikationsschnittstelle (141) und dem Speicher (147), wobei die Verarbeitungseinheit (146) betriebsfähig ist zum: Verfolgen von Daten, die mit der Kommunikationsvorrichtung (110) assoziiert sind, und Daten, die mit der synchronisierbaren Computervorrichtung (130) assoziiert sind, wobei die mit der Kommunikationsvorrichtung (110) assoziierten Daten einen Teilsatz der Daten aufweisen, die mit der synchronisierbaren Computervorrichtung (130) assoziiert sind; und Implementieren der Schritte des Verfahrens nach den Ansprüchen 1 bis 6.

8. Computerprogrammprodukt, das ein computerverwendbares Medium mit einem computerlesbaren Programmcode aufweist, der ausgebildet ist, ausgeführt zu werden zum Implementieren eines Verfahrens zur Fernsuche von auf einer Kommunikationsvorrichtung (110) gespeicherten Daten, wobei die Kommunikationsvorrichtung (110) in Kommunikation mit einem Server (120) ist zum Verfolgen von Daten, die mit der Kommunikationsvorrichtung (110) assoziiert sind, und Daten, die mit einer synchronisierbaren Computervorrichtung (130) assoziiert sind, die mit der Kommunikationsvorrichtung (110) synchronisierbar ist, wobei das Verfahren aufweist:
Führen, an dem Server (120), eines Indexes von Daten, die auf der Kommunikationsvorrichtung (110) gespeichert sind, wobei der Index vorgesehen ist zum Unterscheiden der auf der Kommunikationsvorrichtung (110) gespeicherten Daten von auf der synchronisierbaren Computervorrichtung (130) gespeicherten Daten, wobei die Daten, die auf der Kommunikationvorrichtung (110) gespeichert sind, einen Teilsatz der Daten aufweisen, die auf der synchronisierbaren Computervorrichtung (130) gespeichert sind;
Führen einer durchsuchbaren Kopie von Daten, die auf der Kommunikationsvorrichtung (110) gespeichert sind, querverwiesen zu dem Index, wobei die durchsuchbare Kopie unter Verwendung von Suchparameterdaten durchsuchbar ist, die von der Kommunikationsvorrichtung (110) empfangen werden, um Suchergebnisse zu erzeugen, die zurück an die Kommunikationsvorrichtung (110) übertragen werden können, wobei die durchsuchbare Kopie (110) auf einem des Servers (120) und einer entfernten Computervorrichtung gespeichert ist,
wobei der Datenindex jeweilige Positionen der auf der Kommunikationsvorrichtung (110) gespeicherten Daten umfasst, und
wobei die Suchergebnisse jeweilige Positionen der Suchergebnisse auf der Kommunikationsvorrichtung (110) aufweisen.

## Revendications

1. Procédé de recherche à distance dans des données stockées sur un dispositif de communication (110), ledit dispositif de communication (110) communiquant avec un serveur (120) afin de suivre des données associées audit dispositif de communication (110) et des données associées à un dispositif informatique synchronisable (130) qui peut être synchronisé avec ledit dispositif de communication (110), le procédé comprenant les étapes consistant à :
maintenir sur ledit serveur (120) un index des données stockées sur ledit dispositif de communication (110), ledit index étant destiné à distinguer entre lesdites données stockées sur ledit dispositif de communication (110) et des données stockées sur ledit dispositif informatique synchronisable (130), lesdites données stockées sur ledit dispositif de communication (110) constituant un sous-ensemble desdites données stockées sur ledit dispositif informatique synchronisable (130) ;
maintenir une copie permettant la recherche des données stockées sur ledit dispositif de communication (110), avec référence croisée avec ledit index, ladite copie permettant la recherche pouvant faire l'objet d'une recherche à l'aide de données de paramètres de recherche reçues dudit dispositif de communication (110), afin de produire des résultats de recherche qui peuvent être renvoyés audit dispositif de communication (110), ladite copie permettant la recherche (110) étant stockée soit sur ledit serveur (120), soit sur un dispositif informatique distant ;
dans lequel ledit index des données comprend des emplacements respectifs desdites données stockées sur ledit dispositif de communication (110) ; et
dans lequel lesdits résultats de recherche comprennent des emplacements respectifs desdits résultats de recherche sur ledit dispositif de communication (110).

2. Procédé selon la revendication 1, comprenant en outre les étapes consistant à :
recevoir dudit dispositif de communication (110) les données desdits paramètres de recherche ;
rechercher ladite copie permettant la recherche, à l'aide des données de paramètres de recherche, afin de produire lesdits résultats de recherche ; et
émettre lesdits résultats de recherche vers ledit dispositif de communication (110).

3. Procédé selon la revendication 2, comprenant en outre l'étape consistant à synchroniser ledit index de données et ladite copie permettant la recherche avec lesdites données stockées sur ledit dispositif de communication (110), avant de rechercher dans ladite copie permettant la recherche.

4. Procédé selon l'une quelconque des revendications précédentes, comprenant en outre l'étape consistant à synchroniser ledit index de données et ladite copie permettant la recherche avec lesdites données stockées sur ledit dispositif de communication (110).

5. Procédé selon l'une quelconque des revendications précédentes, dans lequel lesdites données stockées sur ledit dispositif de communication (110) consistent en au moins un des types de données suivants : données de messages, pièces jointes aux messages, données d'agenda, données de contacts, données de notes, données de mémos et données de tâches.

6. Procédé selon l'une quelconque des revendications précédentes, dans lequel ladite copie permettant la recherche est maintenue sur au moins soit ledit serveur (120), soit un dispositif informatique distant (130) en communication avec ledit serveur (120).

7. Serveur (120) destiné à réaliser une recherche à distance dans des données stockées sur un dispositif de communication (110), ledit serveur (120) comprenant :
une interface de communication (141) permettant de communiquer avec ledit dispositif de communication (110) et un dispositif informatique synchronisable (130), qui peut être synchronisé avec ledit dispositif de communication (110) ;
une mémoire (147) permettant de stocker un index de données stockées sur ledit dispositif de communication (110) ;
une unité de traitement (146) communiquant avec ladite interface de communication (141) et ladite mémoire (147), ladite unité de traitement (146) permettant de suivre des données associées audit dispositif de communication (110) et des données associées audit dispositif informatique synchronisable (130), lesdites données associées audit dispositif de communication (110) constituant un sous-ensemble desdites données associées audit dispositif informatique synchronisable (130) et de mettre en oeuvre l'une quelconque des étapes du procédé selon l'une des revendications 1 à 6.

8. Produit programme d'ordinateur, comprenant un support utilisable par ordinateur portant du code de programme lisible par ordinateur conçu pour être exécuté afin de mettre en oeuvre un procédé de recherche à distance dans des données stockées sur un dispositif de communication (110), ledit dispositif de communication (110) communiquant avec un serveur (120) afin de suivre des données associées audit dispositif de communication (110) et des données associées à un dispositif informatique synchronisable (130), qui peut être synchronisé avec ledit dispositif de communication (110), ledit procédé comprenant les étapes consistant à :
maintenir sur ledit serveur (120) un index des données stockées sur ledit dispositif de communication (110), ledit index étant destiné à distinguer entre lesdites données stockées sur ledit dispositif de communication (110) et des données stockées sur ledit dispositif informatique synchronisable (130), lesdites données stockées sur ledit dispositif de communication (110) constituant un sous-ensemble desdites données stockées sur ledit dispositif informatique synchronisable (130) ;
maintenir une copie permettant la recherche des données stockées sur ledit dispositif de communication (110), avec référence croisée avec ledit index, ladite copie permettant la recherche pouvant faire l'objet d'une recherche à l'aide de données de paramètres de recherche reçues dudit dispositif de communication (110), afin de produire des résultats de recherche qui peuvent être renvoyés audit dispositif de communication (110), ladite copie permettant la recherche (110) étant stockée soit sur ledit serveur (120), soit sur un dispositif informatique distant ;
dans lequel ledit index des données comprend des emplacements respectifs desdites données stockées sur ledit dispositif de communication (110) ; et
dans lequel lesdits résultats de recherche comprennent des emplacements respectifs desdits résultats de recherche sur ledit dispositif de communication (110).
